(19) Europäisches Patentamt
European Patent Office
Office européen des brevets

(11) **EP 1 939 649 A2**

(12) # EUROPEAN PATENT APPLICATION

(43) Date of publication:
**02.07.2008 Bulletin 2008/27**

(51) Int Cl.:
***G01S 17/93*** (2006.01)        ***G01S 17/89*** (2006.01)

(21) Application number: **07024970.1**

(22) Date of filing: **21.12.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **26.12.2006 JP 2006350630**

(71) Applicant: **YAMAHA CORPORATION**
**Naka-ku**
**Hamamatsu-shi**
**Shizuoka-ken 430-8650 (JP)**

(72) Inventor: **Hanagasaki, Osamu**
**Hamamatsu-shi**
**Shizuoka-ken (JP)**

(74) Representative: **HOFFMANN EITLE**
**Patent- und Rechtsanwälte**
**Arabellastrasse 4**
**81925 München (DE)**

(54)    **Inter-vehicular distance measurement system and method**

(57)    Processor of an inter-tail-light distance measurement apparatus of a succeeding vehicle (2) extracts images of left and right tail lights (11R, 11L) of a preceding vehicle (1) from an image taken by an image sensor (21), calculates a distance (La), in the image taken by the image sensor, between the extracted images of the left and right tail lights, and detects a time difference (td) between respective intensity variations over time of the extracted images of the left and right tail lights. Further, the processor calculates a distance (L) between the left and right tail lights (11R, 11L) of the preceding vehicle (1) on the basis of the time difference (td) between the intensity variations, and calculates a distance (d) to the preceding vehicle (1) on the basis of the distance (La) between the images of the tail lights and the distance (L) between the tail lights (11R, 11L).

F I G. 1

EP 1 939 649 A2

**Description**

The present invention relates to inter-vehicular distance measurement systems and methods for use in vehicles.

As means added to vehicles for enhancing safety of vehicles, there have been proposed various inter-vehicular distance measurement apparatus for measuring a distance to another vehicle in front (i.e., preceding vehicle). Recent inter-vehicular distance measurement apparatus come in various types. Inter-vehicular distance measurement apparatus of a first type are constructed to take an image around the vehicle by means of an image sensor, extract an image of a vehicle in front (i.e., preceding vehicle) out of the image around the vehicle, emit laser light or electromagnetic wave toward the preceding vehicle and then receives the laser light or electromagnetic wave reflected back from the preceding vehicle to thereby measure a distance to the preceding vehicle (see, for example, USP-5,699,149 corresponding to Japanese Patent Application Laid-open Publication No. HEI-7-332966). Inter-vehicular distance measurement apparatus of the second type are constructed to take two images of a preceding vehicle by means of a pair of image sensors, obtains deviation amounts, from respective optical axes, of the two images and then calculate an inter-vehicle distance on the basis of the deviation amounts in accordance with the principle of known triangular surveying.

However, the inter-vehicular distance measurement apparatus of the aforementioned first type require not only devices for transmitting and receiving the laser light or the like but also a separate image sensor for finding a direction of the preceding vehicle to determine an irradiation direction of the laser light or the like, and thus, the inter-vehicular distance measurement apparatus would become expensive. Further, with the inter-vehicular distance measurement apparatus of the aforementioned first type, which measure an inter-vehicular distance by receiving the laser light or electromagnetic wave reflected back from the preceding vehicle, the measurement tends to be susceptible to the weather, material of the preceding vehicle, etc. Furthermore, the inter-vehicular distance measurement apparatus of the aforementioned second type, which require two image sensors, would also become expensive. In addition, with the inter-vehicular distance measurement apparatus of the second type, where the individual image sensors have to be installed at positions that permit appropriate triangular surveying, the structural design of a front section of the vehicle equipped with the measurement apparatus is undesirably greatly limited due to the installation of the image sensors.

In view of the foregoing, it is an object of the present invention to provide an improved inter-vehicular distance measurement system and method which can appropriately measure an inter-vehicular distance in a stable manner even in a poor environment without requiring high cost.

In order to accomplish the above-mentioned object, the present invention provides an improved inter-vehicular distance measurement system including an inter-vehicular distance measuring light transmission apparatus and inter-vehicular distance measurement apparatus mounted on vehicles. The inter-vehicular distance measuring light transmission apparatus comprises: left and right tail lights (or tail lamps) each irradiating light rearwardly of the vehicle ; a modulating signal generation section that generates two-phase modulating signals presenting a time difference therebetween corresponding to a distance between the left and right tail lights; and a modulation section that, in accordance with respective ones of the two-phase modulating signals, modulates driving signals to be given to the left and right tail lights. Further, the inter-vehicular distance measurement apparatus comprises: an image sensor that takes an image of an area in front of the vehicle; an extraction section that extracts images of the left and right tail lights of a preceding vehicle from the image taken by the image sensor; an inter-tail-light-image distance calculation section that calculates a distance, in the image taken by the image sensor, between the images of the left and right tail lights extracted by the extraction section; a time difference detection section that detects a time difference between respective intensity variations over time of the images of the left and right tail lights extracted by the extraction section; an inter-tail-light distance calculation section that calculates the distance between the left and right tail lights on the basis of the time difference detected by the time difference detection section; and an inter-vehicular distance calculation section that calculates an inter-vehicular distance to the preceding vehicle on the basis of the distance between the images of the left and right tail lights of the preceding vehicle calculated by the inter-tail-light-image distance calculation section and the distance between the left and right tail lights calculated by the inter-tail-light distance calculation section.

Consider a case where two vehicle are traveling in succession. In the inter-vehicular distance measuring light transmission apparatus of the preceding vehicle, the left and right tail lights each irradiate light rearwardly of the vehicle. Two-phase modulating signals, presenting a time difference therebetween corresponding to a distance between the left and right tail lights, are generated by the modulating signal generation section, and driving signals to be supplied to the left and right tail lights are modulated, by the modulation section, in accordance with the respective two-phase modulating signals. In this manner, the left and right tail lights are driven to blink. Further, in the inter-vehicular distance measurement apparatus of the succeeding vehicle, the image sensor takes an image of (i.e., images) an area in front of the succeeding vehicle. Respective images of the left and right tail lights of the preceding vehicle are extracted, by the extraction section, from the image taken by the image sensor. Distance, in the image taken by the image sensor, between the images of the left and right tail lights is calculated by the inter-tail-light-image distance calculation section. Time difference between respective intensity variations over time of the extracted images of the left and right tail lights is detected by the time difference detection section, and the distance between the left and right tail lights is calculated, by the inter-tail-light distance calculation section, on the basis of the time difference detected by the time difference detection section. Then, an inter-vehicular distance to the preceding vehicle is calculated, by the inter-vehicular distance calculation section, on the basis of the distance between the images of the left and right tail lights of the preceding vehicle calculated by the inter-tail-light-image distance calculation section and the distance between the left and right tail lights calculated by the inter-tail-light distance calculation section.

With the aforementioned arrangements, the inter-vehicular distance measurement system of the present invention can accurately measure a distance between the preceding vehicle and the succeeding vehicle, using only the image sensor as a necessary sensor for obtaining an inter-vehicular distance. Thus, even in a poor environment, the inter-vehicular distance measurement system of the present invention can accurately measure a distance between vehicles in a stable manner and can be provided inexpensively or at low cost.

According to another aspect of the present invention, there is provided a method for measuring a distance between a preceding vehicle and a succeeding vehicle by use of left and right tail lights, each irradiating light rearwardly of the preceding vehicle, and an image sensor that takes an image of an area in front of the succeeding vehicle, which comprises: a step of generating two-phase modulating signals presenting a time difference therebetween corresponding to a distance between the left and right tail lights; a step of, in accordance with respective ones of the two-phase modulating signals, modulating driving signals to be given to the left and right tail lights; a step of extracting images of the left and right tail lights of the preceding vehicle from the image taken by the image sensor; an inter-image calculation step of calculating a distance, in the image taken by the image sensor, between the images of the left and right tail lights extracted by the step of extracting; a step of detecting a time difference between respective intensity variations over time of the extracted images of the left and right tail lights; an inter-tail-light distance calculation step of calculating a distance between the left and right tail lights on the basis of the time difference detected by the step of detecting; and a step of calculating an inter-vehicular distance between the preceding vehicle and the succeeding vehicle on the basis of the distance between the images of the left and right tail lights of the preceding vehicle calculated by the inter-image distance calculation step and the distance between the left and right tail lights calculated by the inter-tail-light distance calculation step.

The present invention may be constructed and implemented not only as the apparatus invention as discussed above but also as a method invention. Also, the present invention may be arranged and implemented as a software program for execution by a processor such as a computer or DSP, as well as a storage medium storing such a software program. Further, the processor used in the present invention may comprise a dedicated processor with dedicated logic built in hardware, not to mention a computer or other general-purpose type processor capable of running a desired software program.

The following will describe embodiments of the present invention, but it should be appreciated that the present invention is not limited to the described embodiments and various modifications of the invention are possible without departing from the basic principles. The scope of the present invention is therefore to be determined solely by the appended claims.

For better understanding of the objects and other features of the present invention, its preferred embodiments will be described hereinbelow in greater detail with reference to the accompanying drawings, in which:

Fig. 1 is a block diagram showing an example general setup of an inter-vehicular distance measurement system in accordance with an embodiment of the present invention;
Figs. 2A and 2B are waveform diagrams showing examples of waveforms of two-phase modulating signals generated by a modulating signal generation section employed in the embodiment;
Fig. 3 is a block diagram showing an example construction of an image sensor employed in the embodiment;
Fig. 4 is a time chart showing a control operation sequence performed by a processor in the embodiment;
Fig. 5 is a time chart showing an operational sequence of a full access process performed in the embodiment;
Fig. 6 is a time chart showing an operational sequence of a partial access process performed in the embodiment;
Fig. 7 is a diagram explanatory of an inter-vehicular distance calculation process performed in the embodiment; and
Fig. 8 is a block diagram explanatory of example structural arrangements of sections provided following sample-and-hold circuits of the image sensor in a modification of the present invention.

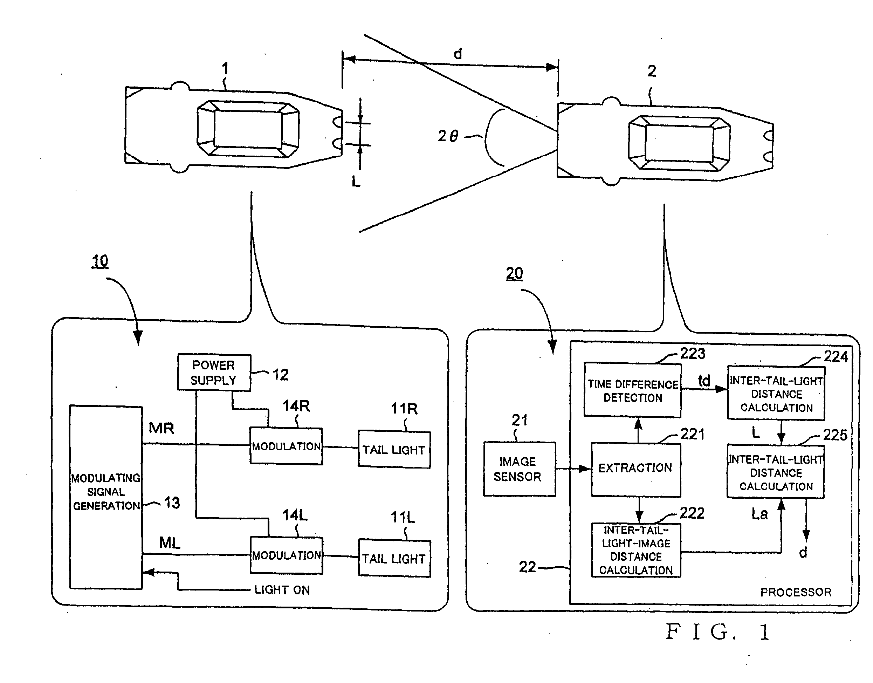

Fig. 1 is a block diagram showing an example general setup of an inter-vehicular distance measurement system in accordance with an embodiment of the present invention. The inter-vehicular distance measurement system of the invention comprises an inter-vehicular distance measuring light transmission apparatus 10 and inter-vehicular distance measurement apparatus 20 mounted on a vehicle. In Fig. 1, there are shown two (i.e., preceding and succeeding) vehicles 1 and 2, with the inter-vehicular distance measuring light transmission apparatus 10 mounted on the preceding vehicle 1 and the inter-vehicular distance measurement apparatus 20 mounted on the succeeding vehicle 2. Although not specifically shown in the figure in order to avoid complicated illustration, the inter-vehicular distance measurement apparatus 20 is also mounted on the preceding vehicle 1, and the inter-vehicular distance measuring light transmission apparatus 10 is also mounted on the succeeding vehicle 2.

In Fig. 1, the inter-vehicular distance measuring light transmission apparatus 10 includes left and right tail lights (or tail lamps) 11L and 11R, a power supply 12, a modulating signal generation section 13, and modulation sections 14L and 14R.

In a preferred implementation as illustrated example of Fig. 1, the tail lights 11L and 11R, each of which is preferably in the form of an LED, are each supplied with an electric current from the power supply 12 to generate light and emit the generated light rearwardly of the vehicle 1. The modulating signal generation section 13 is a circuit that generates two-phase modulating signals ML and MR. The modulation sections 14L and 14R modulate driving signals, which are to be supplied to the tail lights 11L and 11R, with the respective modulating signals ML and MR. More specifically, the modulation section 14L is a switch that is inserted in a signal path extending from the power supply 12 to the left tail light 11L and that is caused to shift between ON and OFF states by the modulating signal ML given from the modulating signal generation section 13. Similarly, the modulation section 14R is a switch that is inserted in a signal path extending from the power supply 12 to the right tail light 11R and that is caused to shift between ON and OFF states by the modulating signal MR given from the modulating signal generation section 13.

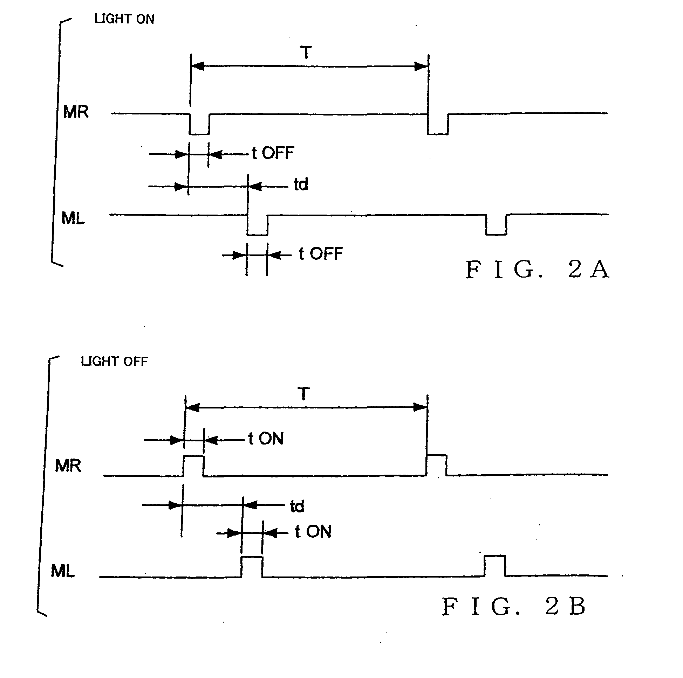

Figs. 2A and 2B are waveform diagrams showing examples of waveforms of the modulating signals ML and MR generated by the modulating signal generation section 13. While a key switch of the vehicle 2 is pointing to "Light ON", the modulating signal generation section 13 generates modulating signals ML and MR that normally keep the tail lights 11L and 11R in an ON state but turn off the tail lights 11L and 11R for a short time tOFF with a cyclic period T and with a time difference td therebetween corresponding to a distance between the tail lights 11L and 11R, as shown in Fig. 2A. While the key switch of the vehicle 2 is pointing to "Light OFF", on the other hand, the modulating signal generation section 13 generates modulating signals ML and MR that normally keep the tail lights 11L and 11R in an OFF state but turn on the tail lights 11L and 11R for a short time tON with the cyclic period T and with the time difference td therebetween corresponding to the distance between the tail lights 11L and 11R, as shown in Fig. 2B.

It is preferable that the time tOFF for which the tail lights 11L and 11R are turned off during the "light ON" period and the time tON for which the tail lights 11L and 11R are turned on during the "light OFF" period be short enough that the instantaneous OFF or ON state of the light emission can not be perceived by the human visual sense. In the instant embodiment, the period T is, for example, 20 ms, the times tOFF and tON are each, for example, 100 $\mu$ sec, and the time difference td is set so as to take a one-msec length every one meter of the distance between the left and right tail lights 11L and 11R.

Further, in Fig. 1, the inter-vehicular distance measurement apparatus 20 includes an image sensor 21 that takes an image of an area within a view angle 2 θ in front of the vehicle 2, and a processor 22 that processes image signals, output from the image sensor 2, to obtain an inter-vehicular distance d between the preceding vehicle 1 and the succeeding vehicle 2. In order to obtain the inter-vehicular distance d, the processor 22 performs an extraction process 221, an inter-tail light-image distance calculation process 222 for calculating a distance between respective images of the tail lights 11L and 11R, a time difference detection process 223, an inter-tail-light distance calculation process 224 for calculating a distance between the tail lights 11L and 11R, and an inter-vehicular distance calculation process 225. Details of these processes 221 - 225 will be discussed in a subsequent description about behavior of the instant embodiment.

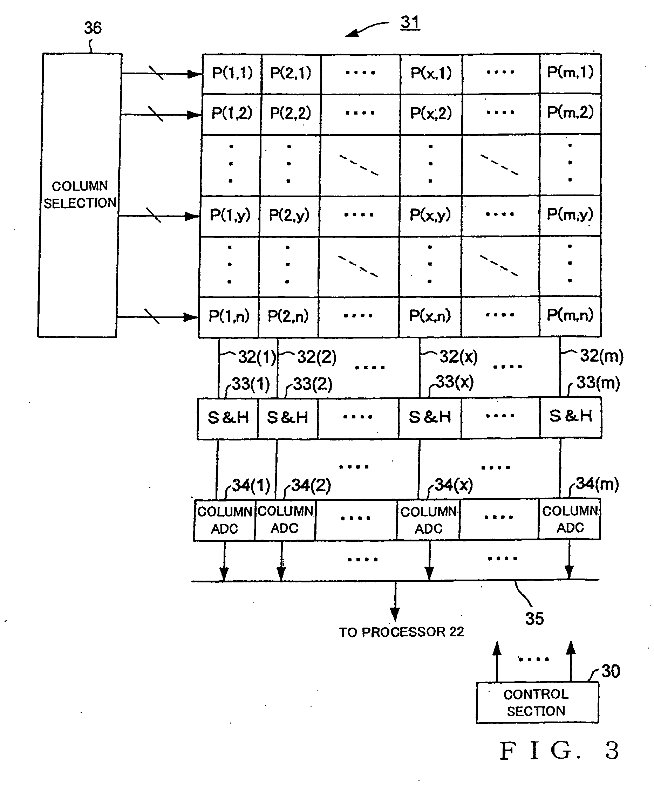

Fig. 3 is a block diagram showing an example construction of the image sensor 21 employed in the instant embodiment. Although various types of image sensors may be used as the image sensor 21, the image sensor 21 in the illustrated example is in the form of a CMOS solid-state image pickup device.

In Fig. 3, a pixel matrix section 31 has "m X n" pixels P(x, y) (x = 1 - m, y = 1 - n) that output pixel signals corresponding to their respective received light amounts. Each of the pixels P(x, y) comprises a photo diode (PD) that generates a signal charge corresponding to the received light amount, a floating diffusion element (FD) that generates a voltage corresponding to a stored charge, a reset transistor that resets the voltage of the FD, a transfer transistor that transfers the charge, stored in the PD, to the FD, and a transistor that takes the voltage of the FD to outside the pixel P (x, y). On the front face of a light receiving surface of the pixel matrix section 31, there is provided a filter (not shown) that passes therethrough only light of a predetermined wavelength range including a wavelength of light output from the tail lights 11L and 11R.

The pixel matrix section 31 has a given number m of row signal lines 32(x) (x = 1 - m) corresponding to individual rows of the pixels. Each of a given number n of pixels P(x, y) (y = 1 - n) belonging to an x-th row outputs an image signal to the common or same row signal line 32(x). Under control of a control section 30, a column selection section 36 performs: readout control for sequentially or randomly selecting a pixel column of which pixel signals are to be read out, then causing the transfer transistors of the m pixels P(x, y) (x = 1- m), belonging to the selected column, to transfer the electric charges from the PDs to the FDs and then causing pixel signals, corresponding to the voltages of the FDs, to the row signal lines 32(x) (x = 1 - m); and reset control for causing the reset transistors of the m pixels P(x, y) (x = 1 - m), belonging to the selected column, to output the voltages of the FDs.

Under the control of the control section 30, the pixel signals output to the individual row signal lines 32(x) (x = 1 - m) are sampled and held by corresponding sample-and-hold circuits 33(x) (x = 1 - m), converted by corresponding column A/D converters (ADCs) 34(x) (x = 1 - m) and then sequentially supplied via a bus 35 to the processor 22.

In the instant embodiment, the readout of image signals from the pixels P(x, y) (x = 1 - m, y = 1 - y) is performed by "full access" and "partial access". The "full access" is a form of readout in which pixel signals of one screen are read out from all of the pixels P(x, y) (x = 1 - m, y = 1 - n). The "partial access", on the other hand, is a form of readout in which pixel signals are read out only from pixels designated by the processor 22 from among the pixels P(x, y) (x = 1- m, y = 1 - n). The control section 30 has a function for controlling various sections to effect the "full access" and "partial access" under the control of the processor 22.

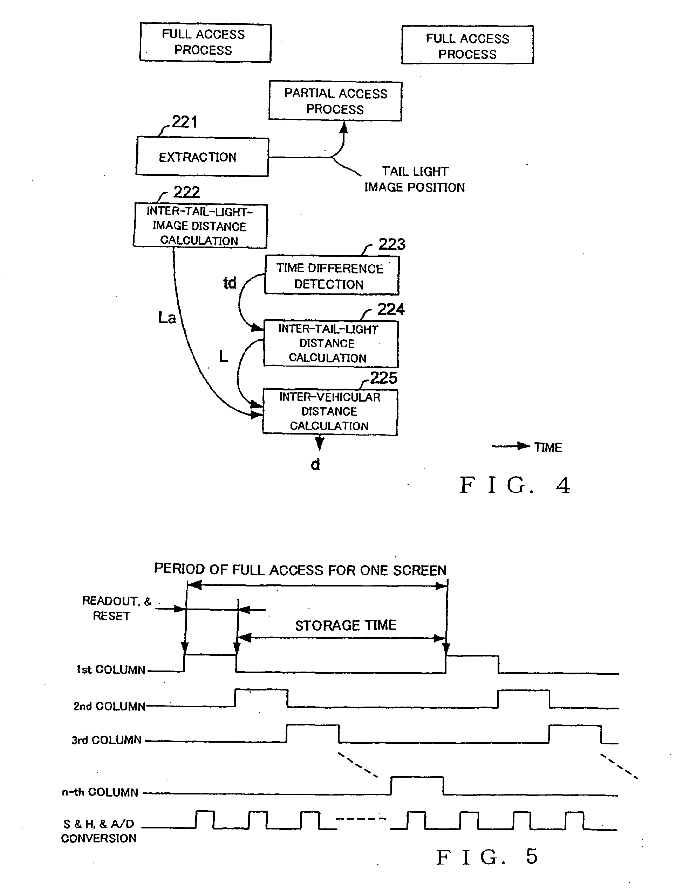

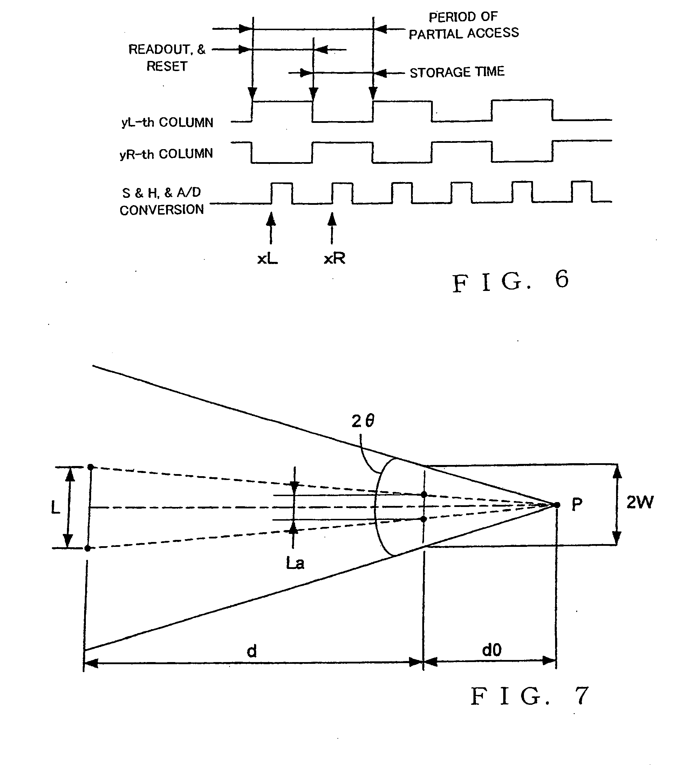

Fig. 4 is a time chart showing a control operation sequence performed by the processor 22, Fig. 5 is a time chart showing an operational sequence of a full access process, and Fig. 6 is a time chart showing an operational sequence of a partial access process. Fig. 7 is a diagram explanatory of the inter-vehicular distance calculation process 225 performed in the instant embodiment. Hereinbelow, a description will be given about the behavior of the instant embodiment.

In the instant embodiment, the processor 22 causes the control section 30 of the image sensor 21 to selectively perform the full access process that comprises repeating the full access a predetermined number of times, and the partial access process that comprises repeating the partial access a predetermined number of times. For example, these full access process and partial access process are repetitively performed in an alternate fashion. Processing function of an access control section is implemented by the processor 22 and control section 30.

In the full access of one screen, as shown in Fig. 5, the control section 30 causes, for each of columns of the pixels P(x, y) (x = 1- m, y = 1 - n), the column selection section 36 to read out pixel signals of the m pixels P (x, y) (x = 1 - m) to the row signal lines 32(x) (x = 1 - m) and to reset the voltages of the FDs of the pixels (x, y) (x = 1 - m). Further, in the full access of one full screen, each time the pixel signals of one column are read out to the row signal lines 32(x) (x = 1 - m), the control section 30 causes the sample-and-hold circuits 33(x) (x = 1 - m) to sample and hold the pixel signals of the one column, causes the column ADCs 34(x) (x = 1 - m) to convert the pixel signals into digital signals and causes the digital pixel signals of the one column to be sequentially transferred to the processor 22 via the bus 35. In the full access, the storage time of the signal charges of the pixels (x, y) (x = 1- m) is equal to a time length from the end of the readout and reset, by the FDs, of pixel signals of the column to the start of the readout and reset, by the FDs, of pixel signals of the next column, and such a storage time is set at about 30 msec in the instant embodiment. In one execution of the full access process, the full access may be performed at least once; it may be performed a plurality of times as necessary.

During the time that such a full access process is performed, the processor 22 performs the extraction process 221 and inter-tail-light-image distance calculation process 222, as shown in Fig. 4.

The extraction process 221 is a process for extracting respective images of the two tail lights 11L and 11R from an (overall) image taken by the image sensor 21.

In the instant embodiment, as set forth above, the tail lights 11L and 11R of the preceding vehicle 1 are repetitively turned on and off (i.e., blinked) with the period T of 20 msec. However, in the full access performed in the instant embodiment, the signal charge is stored in the individual pixels P(x, y) (x = 1- m, y = 1 - n) for the storage time of about 30 msec longer than the period T of 20 msec. In one execution of the full access, the digital pixel signals of one screen, which the processor 22 acquires from the image sensor 21, represent an average received light amount of the individual pixels for the storage time of about 30 msec. Thus, even though the tail lights 11L and 11R are turned on and off cyclically or at intervals, digital pixel signals indicative of an image of one screen, containing images of both of the tail lights 11L and 11R, can be acquired from the image sensor 21 in the full access process as long as the imaging is performed with the tail lights 11L and 11R located within the viewing field of the image sensor 21.

In the extraction process 221, the processor 22 extracts the respective images of the tail lights 11L and 11R within the imaged screen on the basis of the digital pixel signals acquired through the full screen access. If, for example, the light emitted from the tail lights 11L and 11R is red-colored light, the respective images of the tail lights 11L and 11R within the imaged screen of the image sensor 21 each present an isolated region having a plurality of densely-packed red-colored pixels. Thus, in such a case, the processor 22 may perform the extraction process 221 by determining an image region of each of the tail lights 11L and 11R by repeating the operations of selecting a red-colored pixel, from among the pixels of the one screen indicated by the digital pixel signals acquired from the image sensor 21, as a pixel of the tail light image region and then including another pixel, adjoining the above-mentioned particular red-colored pixel, into the tail light image region if the other pixel is a red-colored pixel. Because the light emitted from the tail lights 11L and 11R may sometimes have color unevenness, a filter process for minimizing an adverse effect of the color unevenness may be performed in combination with the extraction process 221.

The inter-tail-light-image distance calculation process 222 is a process for calculating a distance La, within the imaged screen, between the images of the tail lights 11L and 11R extracted by the above-mentioned extraction process 221. Preferably, a distance between the center of the image of the left tail light 11L and the center of the image of the right tail light 11R is calculated as the distance La in the inter-tail-light-image distance calculation process 222.

When the processor 22 causes the image sensor 21 to perform the partial access process, the processor 22 informs the control section 30 of the image sensor 21 of positions of respective representative pixels of the images of the tail lights 11L and 11R (e.g., respective central pixels of the tail lamp images) extracted by the extraction process 221 from the imaged screen, and it causes the control section 30 to perform the partial access on these representative pixels. In the partial access process, the partial access is repeated a plurality of times with a short cyclic period of, for example, 10 $\mu$sec. One partial access is carried out as follows.

Let it be assumed here that the representative pixel of the image of the left tail light 11L is in an xL-th row and yL-th column while the representative pixel of the image of the right tail light 11R is in an xR-th row and yR-th column. In this case, the control section 30 first causes the column selection section 36 to read out pixel signals from the m pixels (x, yL) (x = 1 - m) in the yL-th column to the row signal lines 32(x) (x = 1 - m) and reset the voltages of the FDs of the pixels (x, yL) (x = 1 - m). Then, the control section 30 causes the sample-and-hold circuit 33 (xL) corresponding to the xL-th row to sample and hold the pixel signal of the row signal line 32(xL) and causes the column ADC 34 (xL) to convert the sampled-and-held pixel signal into digital representation.

Also, the control section 30 causes the column selection section 36 to read out pixel signals from the m pixels (x, yR) (x = 1 - m) in the yR-th column to the row signal lines 32(x) (x = 1 - m) and reset the voltages of the FDs of the pixels (x, yR) (x = 1 - m). Then, the control section 30 causes the sample-and-hold circuit 33 (xR) corresponding to the xR-th row to sample and hold the pixel signal of the row signal line 32(xR) and causes the column ADC 34 (xR) to convert the sampled-and-held pixel signal into digital representation.

In the aforementioned manner, one partial access is completed, and the digital pixel signal of the representative pixel of the left tail light 11L and digital pixel signal of the representative pixel of the right tail light 11R are supplied from the image sensor 21 to the processor 22. In the partial access process, the partial access for reading out the pixel signals of the representative pixels of the left and right tail lights 11L and 11R is repeated a plurality of times. In the instant embodiment, the time length of one execution of the partial access process, where the partial access is performed a plurality of times, is set longer than the blinking period T shown in Fig.2. This arrangement is intended to permit reliable detection of the respective blinking time points of the tail lights 11L and 11R during each execution of the partial access process.

During the time that the partial access process is performed, the processor 22 performs the time difference detection process 223, inter-tail-light distance calculation process 224 and inter-vehicular distance calculation process 225.

The time difference detection process 223 is a process for detecting a time difference between respective blinking patterns of the images of the left and right tail lights 11L and 11R, namely, a time difference td between the modulating signals ML and MR used in the preceding vehicle 1 for modulation of driving currents to be given to the tail lights 11L and 11R.

The processor 22 carries out the time difference detection process 223 with reference to the digital pixel signals supplied from the processor 22 during the partial access process. In each partial access, the digital pixel signal of the representative pixel of the image of the left tail light 11L and digital pixel signal of the representative pixel of the image of the right tail light 11R are output from the image sensor 21. In the instant embodiment, the storage time of the signal charge in the partial access is set sufficiently shorter than the OFF time tOFF and ON time tON of the tail lights 11L and 11R. Further, the time length of one execution of the partial access process, comprising a predetermined number of executions of the partial access, is set longer than the ON/OFF period T of the tail lights 11L and 11R. Thus, the digital pixel signals of the representative pixel of the left tail light 11L and digital pixel signals of the representative pixel of the right tail light 11R, sequentially output from the image sensor 21, accurately represent ON/OFF variation patterns over time of the tail lights 11L and 11R. Consequently, the time difference detection process 223 can accurately detect the time difference td.

The inter-tail-light distance calculation process 224 is a process for calculating a distance L between the left and right tail lights 11L and 11R of the preceding vehicle 1 on the basis of the time difference td detected by the time difference detection process 223. In a preferred implementation, the processor 22 contains a function expression or table for associating time differences td with distances L, so that the distance L between the left and right tail lights 11L and 11R can be determined using the function expression or table.

The inter-vehicular distance calculation process 225 is a process for calculating an inter-vehicular distance d to the preceding vehicle 1 on the basis of the distance La between the images of the tail lights 11L and 11R calculated in the inter-tail-light-image distance calculation process 222 and the distance L between the left and right tail lights 11L and 11R of the preceding vehicle 1 calculated by the inter-tail-light distance calculation process 224. The following paragraphs describe details of the inter-vehicular distance calculation process 225, with reference to Fig. 7.

If the view angle, in the horizontal direction (i.e., direction of the pixel rows), of the image sensor 21 is "2θ ", a distance from an imaging surface (i.e., plane in which the pixels P(x, y) (x = 1 - m, y = 1 - n) are arranged) to a point of view P of the image sensor 21 is "d0" and a horizontal dimension of the imaging surface (i.e., length of pixels (x, y) (x = 1- m)in one column) is "2W',

$$\tan \theta = W / d0 \qquad\qquad (1),$$

and thus, the following expression is established

$$d0 = W / \tan \theta \qquad\qquad (2)$$

As also clearly seen from Fig. 7, the following relationship is established among d0, La, d and L.

$$d0 : La = (d0 + d) : L \qquad\qquad (3)$$

If expression (3) above is solved with respect to d,

$$d = ((L - La) / La) \cdot d0$$
$$= ((L - La) / La) \cdot (W / \tan \theta) \qquad\qquad (4)$$

Because L>>La, expression (4) above can be approximated as follows:

$$d \fallingdotseq (L \cdot W) / (La / \tan \theta) \qquad\qquad (5)$$

In the inter-vehicular distance calculation process 225, an inter-vehicular distance d is calculated in accordance with mathematical expression (5) above and on the basis of the distance La calculated by the inter-tail-light-image distance calculation process 222 and the distance L calculated by inter-tail-light distance calculation process 224. Thus, in the instant embodiment, a changing distance d to the preceding vehicle can be sequentially obtained through alternate repetition of the full access process and partial access process.

According to the above-described embodiment, only one image sensor is sufficient as the sensor for obtaining an inter-vehicular distance, and no devices for transmitting and receiving laser light or electromagnetic wave are required. Further, because of the recent tendency that more and more tail lights are implemented by LEDs, the arrangements for performing the ON/OFF modulation of the output light of the tail lights can be implemented inexpensively or at low cost. Therefore, the above-described embodiment of the present invention can provide an inexpensive inter-vehicular distance measurement system. Further, because the instant embodiment measures an inter-vehicular distance by acquiring tail light images by means of the image sensor, it can advantageously measure an inter-vehicular distance in a stable manner even in a very poor environment as compared to the case where devices for transmitting and receiving laser light or electromagnetic wave are employed. Furthermore, the above-described embodiment of the invention uses the image sensor, which is capable of randomly accessing the individual pixels arranged in a matrix configuration, to access all of the pixels (perform the full access) of the image sensor with a long storage time to obtain respective images of the left and right tail lights of a vehicle in front, and then access representative pixels (perform the partial access) of the images of the left and right tail lights with a short storage time to thereby obtain a time difference td in ON/OFF modulation between the left and right tail lights. Thus, using a currently-available image sensor, such as a CMOS image sensor, the instant embodiment can obtain, with a high accuracy, positions of the images of the left and right tail lights through the full access, and obtain, with a high accuracy, a time difference td in ON/OFF modulation between the left and right tail lights through the partial access; as a result, the instant embodiment can obtain an inter-vehicular distance d with a significantly increased accuracy.

<Other Embodiment>

Whereas the foregoing have described one preferred embodiment of the present invention, various other modifications are also possible without departing from the basic concept of the present invention.

(1) The partial access process may be modified so that, for each of the images of the left and right tail lights, it reads out pixel signals of a plurality of representative pixels, averages the read-out pixel signals and then binaries the averaged pixel signal. Thus, the modified partial access process may obtain time-series ON/OFF patterns of the imaged left and right tail lights. Even where there exists unevenness in luminance among the pixels, the modification can eliminate an adverse effect of such luminance unevenness, so that it can accurately obtain time-series ON/OFF patterns of the left and right tail lights.

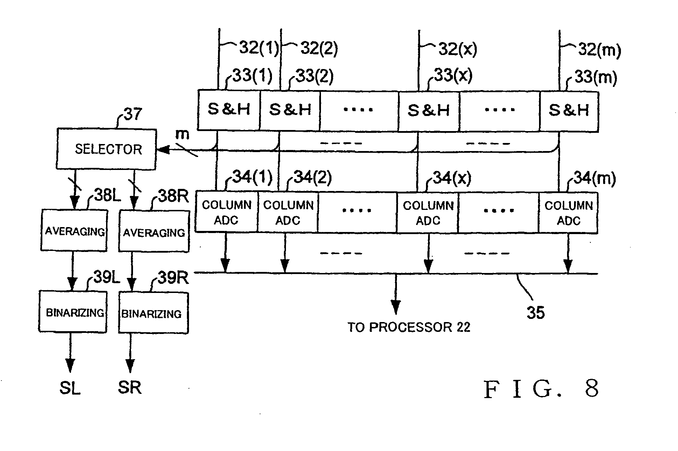

(2) Whereas the above-described embodiment is arranged to obtain time-series ON/OFF patterns of the left and right tail lights using digitized pixel signals, the operation for obtaining such time-series ON/OFF patterns may be performed through analog signal processing. Fig. 8 is a block diagram explanatory of example structural arrangements of sections following the sample-and-hold circuits 33(x) (x = 1 - m) of the image sensor 21 in the modification. In Fig.8, a selector 37 is a circuit which, under the control of the control section 30, selects and outputs, from among pixel signals of m pixels output from the sample-and-hold circuits 33(a) (x = 1 - m), a predetermined number of pixel signals constituting the image of the left tail light 11L and a predetermined number of pixel signals constituting the image of the right tail light 11R.

Further, an averaging section 38L is a circuit which adds together and averages the predetermined number of pixel signals constituting the image of the left tail light 11L and then outputs a resultant averaged pixel signal. Similarly, an averaging section 38R is a circuit which adds together and averages the predetermined number of pixel signals constituting the image of the right tail light 11R and then outputs a resultant averaged pixel signal.

Finalizing sections 39L and 39R are each a circuit which compares each pixel signal, output from the corresponding averaging section 38L or 38R, against a predetermined threshold value and thereby outputs a one-bit digital signal SL or SR indicative of a time-series ON/OFF pattern of the left or right tail light 11L or 11R.

In this modification, the processor 22 selects, at the beginning of the partial access process, a predetermined number of horizontally-arranged representative pixels from an image region of the left tail light 11L and a predetermined number of horizontally-arranged representative pixels from an image region of the right tail light 11R. Then, the processor 22 instructs the control section 30 of the image sensor 21 to perform the partial access on each of the representative pixels.

Upon receipt of the instruction, the control section 30 performs pixel signal readout of a column that includes the representative pixels of the left tail light 11L and causes the column selection section 36 to reset voltages of the FDs. Then, the control section 30 causes the selector 37 to select pixel signals of the predetermined number of representative pixels from among pixel signals on the row signal lines 32(x) (x = 1 - m), causes the averaging section 38L to average the selected pixel signals and causes the finalizing section 39L to binarize the averaged pixel signal. Then, the control section 30 performs pixel signal readout of a column that includes the representative pixels of the right tail light 11R and causes the column selection section 36 to reset voltages of the FDs. Then, the control section 30 causes the selector 37 to select pixel signals of the predetermined number of representative pixels from among pixel signals on the row signal lines 32(x) (x = 1- m), causes the averaging section 38R to average the selected pixel signals and causes the binarizing section 39R to binarize the averaged pixel signal. The processor 22 receives, from the binarizing sections 39L and 39R, one-bit digital signals SL and SR that are the results of the binarization, and performs the time difference detection process 223, using the digital signals SL and SR, to thereby obtain a time difference td of ON/OFF patterns of the left and right tail lights 11L and 11R.

(3) In the above-described embodiment, it is possible that the preceding vehicle is such a vehicle that is not equipped with the inter-vehicular distance measuring light transmission apparatus 10 and always keeps the left and right tail lights in the ON state. In such a case, there may occur a situation where the inter-vehicular distance measurement apparatus 20 can not obtain the time difference td even if the time difference detection process 223 is performed. In case the time difference td can not be obtained, an inter-vehicle distance d may be calculated in the inter-vehicular distance calculation process 225 using a default value as the distance L between the left and right tail lights, and the information that the default value has been used may be displayed on an instrument panel; alternatively, a warning sound may be generated.

(4) In the above-described embodiment, the tail lights 11L and 1R are turned off for the time tOFF during the time that the key switch is pointing to "Light ON". Alternatively, the output light intensity of the tail lights 11L and 1R may be temporarily reduced for the time tOFF instead of the tail lights being kept completely in the OFF state.

**Claims**

1.  An inter-vehicular distance measurement system including an inter-vehicular distance measuring light transmission apparatus (10) and inter-vehicular distance measurement apparatus (20) mounted on vehicles, said inter-vehicular distance measuring light transmission apparatus (10) comprising:

left and right tail lights (11R, 11L) each irradiating light rearwardly of the vehicle;
a modulating signal generation section (13) that generates two-phase modulating signals presenting a time difference therebetween corresponding to a distance between the left and right tail lights; and
a modulation section (14R, 14L) that, in accordance with respective ones of the two-phase modulating signals, modulates driving signals to be given to the left and right tail lights,

said inter-vehicular distance measurement apparatus (20) comprising:

an image sensor (21) that takes an image of an area in front of the vehicle;
an extraction section (221) that extracts images of the left and right tail lights of a preceding vehicle from the image taken by said image sensor;
an inter-tail-light-image distance calculation section (222) that calculates a distance, in the image taken by said image sensor, between the images of the left and right tail lights extracted by said extraction section (221);
a time difference detection section (223) that detects a time difference between respective intensity variations over time of the images of the left and right tail lights extracted by said extraction section (221);
an inter-tail-light distance calculation section (224) that calculates the distance between the left and right tail lights on the basis of the time difference detected by said time difference detection section (223); and
an inter-vehicular distance calculation section (225) that calculates an inter-vehicular distance to the preceding vehicle on the basis of the distance between the images of the left and right tail lights of the preceding vehicle calculated by said inter-tail-light-image distance calculation section (222) and the distance between the left and right tail lights calculated by said inter-tail-light distance calculation section (224).

2. The inter-vehicular distance measurement system as claimed in claim 1 wherein said inter-vehicular distance measurement apparatus (20) further comprises an access control section (22, 30) that causes said image sensor (21) to selectively perform a full access process for outputting pixel signals of all pixels constituting one screen and a partial access process for outputting pixel signals of a portion of all pixels of the image of the left tail light (11L) extracted by said extraction section (221) and pixel signals of a portion of all pixels of the image of the right tail light (11R) extracted by said extraction section (221), and
wherein said time difference detection section (223) detects the respective intensity variations over time of the images of the left and right tail lights (11R, 11L) on the basis of the pixel signals of the portion of all the pixels of the image of the left tail light (11L) and the pixel signals of the portion of all the pixels of the image of the right tail light (11R) which are supplied by said image sensor (21) in the partial access process.

3. The inter-vehicular distance measurement system as claimed in claim 2 wherein, in the partial access process, said image sensor (21) outputs pixel signals of a plurality of pixels for each of the image of the left tail light (11L) and the image of the right tail light (11R), and
wherein said time difference detection section (223) detects the respective intensity variations over time of the images of the left and right tail lights (11R, 11L) on the basis of a pixel signal obtained by averaging the pixel signals of the plurality of pixels of the image of the left tail light (11L) supplied by said image sensor (21) and a pixel signal obtained by averaging the pixel signals of the plurality of pixels of the image of the right tail light (11R) supplied by said image sensor (21).

4. The inter-vehicular distance measurement system as claimed in claim 2 wherein said access control section (22, 30) causes said image sensor (21) to repeat the full access process and the partial access process in an alternate fashion.

5. The inter-vehicular distance measurement system as claimed in claim 4 wherein said access control section (22, 30) causes said image sensor (21) to perform the full access process at least once and then repetitively perform the partial access process a plurality of times.

6. The inter-vehicular distance measurement system as claimed in claim 2 wherein said extraction section (221) extracts the images of the left and right tail lights (11R, 11L) on the basis of pixel signals of the image taken by said image sensor (21) in the full access process, and said inter-tail-light-image distance calculation section (222) calculates the distance between the images of the left and right tail lights (11R, 11L) extracted by said extraction section (221) in the full access process.

7. The inter-vehicular distance measurement system as claimed in claim 2 wherein said time difference detection section (223) detects the time difference between the respective intensity variations over time of the images of the left and right tail lights (11R, 11L) on the basis of pixel signals of the image taken by said image sensor (21) in the partial access process.

8. A method for measuring a distance between a preceding vehicle and a succeeding vehicle by use of left and right tail lights (11R, 11L), each irradiating light rearwardly of the preceding vehicle, and an image sensor (21) that takes an image of an area in front of the succeeding vehicle, said method comprising:

a step of generating two-phase modulating signals presenting a time difference therebetween corresponding to a distance between the left and right tail lights (11R, 11L);
a step of, in accordance with respective ones of the two-phase modulating signals, modulating driving signals to be given to the left and right tail lights (11R, 11L);
a step of extracting images of the left and right tail lights of the preceding vehicle from the image taken by the image sensor (21);
an inter-image calculation step of calculating a distance, in the image taken by the image sensor (21), between the images of the left and right tail lights (11R, 11L) extracted by said step of extracting;
a step of detecting a time difference between respective intensity variations over time of the extracted images of the left and right tail lights (11R, 11L);
an inter-tail-light distance calculation step of calculating the distance between the left and right tail lights (11R, 11L) on the basis of the time difference detected by said step of detecting; and
a step of calculating an inter-vehicular distance between the preceding vehicle and the succeeding vehicle on the basis of the distance between the images of the left and right tail lights (11R, 11L) of the preceding vehicle calculated by said inter-image distance calculation step and the distance between the left and right tail lights (11R, 11L) calculated by said inter-tail-light distance calculation step.

9. A computer-readable storage medium containing a program for causing a computer to perform a method for measuring a distance between a preceding vehicle and a succeeding vehicle by use of left and right tail lights (11R, 11L), each irradiating light rearwardly of the preceding vehicle, and an image sensor (21) that takes an image of an area in front of the succeeding vehicle, said method comprising:

a step of generating two-phase modulating signals presenting a time difference therebetween corresponding to a distance between the left and right tail lights (11R, 11L);
a step of, in accordance with respective ones of the two-phase modulating signals, modulating driving signals to be given to the left and right tail lights (11R, 11L);
a step of extracting images of the left and right tail lights of the preceding vehicle from the image taken by the image sensor (21);
an inter-image calculation step of calculating a distance, in the image taken by the image sensor (21), between the images of the left and right tail lights (11R, 11L) extracted by said step of extracting;
a step of detecting a time difference between respective intensity variations over time of the extracted images of the left and right tail lights (11R, 11L);
an inter-tail-light distance calculation step of calculating the distance between the left and right tail lights (11R, 11L) on the basis of the time difference detected by said step of detecting; and
a step of calculating an inter-vehicular distance between the preceding vehicle and the succeedingvehicle on the basis of the distance between the images of the left and right tail lights (11R, 11L) of the preceding vehicle calculated by said inter-image distance calculation step and the distance between the left and right tail lights (11R, 11L) calculated by said inter-tail-light distance calculation step.

F I G. 1

LIGHT ON

MR

T

t OFF

td

ML

t OFF

F I G. 2 A

LIGHT OFF

T

t ON

MR

td

t ON

ML

F I G. 2 B

F I G. 3

| FULL ACCESS PROCESS | | FULL ACCESS PROCESS |

PARTIAL ACCESS PROCESS

221

EXTRACTION

TAIL LIGHT
IMAGE POSITION

222

INTER-TAIL-LIGHT-
IMAGE DISTANCE
CALCULATION

223

TIME DIFFERENCE
DETECTION

td

La

224

INTER-TAIL-LIGHT
DISTANCE
CALCULATION

L

225

INTER-VEHICULAR
DISTANCE
CALCULATION

→ TIME

d

F I G. 4

PERIOD OF FULL ACCESS FOR ONE SCREEN

READOUT, &
RESET

STORAGE TIME

1st COLUMN

2nd COLUMN

3rd COLUMN

n-th COLUMN

S & H, & A/D
CONVERSION

F I G. 5

14

PERIOD OF
PARTIAL ACCESS

READOUT, &
RESET

STORAGE TIME

yL-th COLUMN

yR-th COLUMN

S & H, & A/D
CONVERSION

xL          xR

## F I G.  6

2θ

L

La

2W

d          d0

P

## F I G.  7

FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5699149 A

- JP HEI7332966 A